# EUROPÄISCHE PATENTSCHRIFT

(11) **EP 2 652 470 B1**
(45) Veröffentlichungstag und Bekanntmachung des Hinweises auf die Patenterteilung: **24.05.2017**
(21) Anmeldenummer: 11788129.2
(22) Anmeldetag: 23.11.2011
(51) Int. Cl.: G01K 1/08, G01K 1/16, G01K 13/02

(54) **SCHUTZROHRINNENTEIL FÜR EIN THERMOMETER MIT EINEM SCHUTZROHR**
PROTECTIVE TUBE INNER PART FOR A THERMOMETER WITH A PROTECTIVE TUBE
PARTIE INTÉRIEURE D'UN TUBE DE PROTECTION POUR UN THERMOMÈTRE À TUBE DE PROTECTION

(30) Priorität: 14.12.2010 DE 102010063062
(43) Veröffentlichungstag der Anmeldung: 23.10.2013
(73) Patentinhaber: Endress+Hauser Wetzer GmbH+Co. KG, 87484 Nesselwang (DE)
(72) Erfinder: KALTEIS, Helmut, 87616 Marktoberdorf (DE); MEISSNER, Wilfried, 87459 Pfronten (DE); SEEFELD, Peter, 87459 Pfronten (DE); SCHMIDT, Dieter, 87484 Nesselwang (DE); UMKEHRER, Alfred, 87659 Hopferau (DE)
(74) Vertreter: Andres, Angelika Maria
(86) Internationale Anmeldenummer: PCT/EP2011/070827
(87) Internationale Veröffentlichungsnummer: WO 2012/079941

(56) Entgegenhaltungen:
- DE-C2- 4 138 460

## Beschreibung

Die Erfindung bezieht sich auf ein Schutzrohrinnenteil zum Einsetzen in ein Schutzrohr, insbesondere eines Thermometers, wobei das Schutzrohrinnenteil zum Anordnen von Leiterelementen dient, und wobei das Schutzrohrinnenteil an die Form der Innenseite des Schutzrohrs im Bereich eines geschlossenen Schutzrohrendes angepasst ist.

Ferner betrifft die Erfindung ein Thermometer mit einem solchen Schutzrohrinnenteil, sowie einen Behälter an den ein solches Thermometer anbringbar ist.

Weiterhin betrifft die Erfindung ein System bestehend aus einem Thermometer und einem Beutel oder Behälter mit einer flexiblen Wandung

Aus dem Stand der Technik sind zahlreiche Thermometer bekannt geworden, die ein gattungsgemäßes Schutzrohrinnenteil aufweisen. Derartige Thermometer weisen ein Schutzrohr auf, in das ein Sensor, auch Messaufnehmer genannt, eingesetzt werden kann. Im Fall eines Thermometers handelt es sich dabei um einen Temperaturmessaufnehmer bspw. in Form eines Thermoelements oder eines temperaturabhängigen Widerstandselements. Aus dem Stand der Technik sind ferner Thermometer bekannt geworden, bei denen der Messaufnehmer Teil eines insbesondere austauschbaren Messeinsatzes ist, welcher in dem Schutzrohr angeordnet ist. Der Messeinsatz besteht dabei aus einem Schutzrohrinnteil und dem Messaufnehmer, wobei das Schutzrohrinnenteil unter anderem zur Halterung des Messaufnehmers dient. Das Schutzrohr selbst dient dabei oftmals als Schutz gegenüber einem bspw. abrasiven Messstoff und ist in ein Behältnis wie bspw. einen Tank oder ein Rohr eingesetzt in dem sich der Messstoff befindet. Derartige für den Einsatz in einer industriellen Umgebung bestimmte Thermometer werden von der Firma Endress+Hauser vertrieben.

Problematisch bei einem derartigen Aufbau ist allerdings die durch das Thermometer hervorgerufene Wärmeableitung zwischen dem Prozess und der Prozessumgebung und der sich daraus ergebende Messfehler. Aus dem Stand der Technik ist es bekannt geworden, diese Wärmeableitung bspw. durch eine große Einbautiefe, d.h. eine große Schutzrohrlänge, zu kompensieren.

So beschreibt bspw. die Patentschrift DE 102006034246 B3 einen Temperaturfühler für ein Widerstandsthermometer, welches über einen Metallmantel verfügt und mit Keramik oder mineralischem Material aufgefüllt ist. Dieses Widerstandsthermometer weist aber einen erheblichen thermischen Ableiteffekt auf, der zu einer fehlerhaften Messung der Temperatur führen kann.

Die Offenlegungsschrift DE 19707844 A1 schlägt externe Konstruktionselemente vor, mit denen Sensorzuleitungen beheizt oder gekühlt werden können, um Messfehler, die durch thermische Ableitung entstehen können, zu vermeiden. Die dort vorgeschlagenen Maßnahmen erfordern aber den Einsatz einer Hilfsenergie.

Die Patentschrift DE 4123093 C2 beschreibt ein Thermometer aus korrosionsfesten Materialien wie Glaswerkstoffen mit druck- und korrosionsfesten Durchführungen, wobei ein dort vorgesehene Armaturenkopf aber eine Evakuierung des Schutzrohrvolumens nicht gestattet. Ebenso offenbart das Gebrauchsmuster DE 8108694 U1 ein nicht evakuierbares Thermometer zur Messung von Oberflächentemperaturen. Der in den vorgenannten Schriftstücken vorgeschlagene Aufbau führt darüber hinaus zu einer erhöhten Wärmeübertragung, d.h. Wärmeableitung über das Schutzrohr und den Messeinsatz in die Umgebung des Prozesses und weist nur eine schlechte thermische Ansprechbarkeit gegenüber Temperaturänderungen im Prozess auf.

Das Gebrauchsmuster DE 7911898 U1 beschreibt einen nicht evakuierbaren Messfühler, der über metallische Einsatzteile verfügt und daher ebenfalls zu thermischer Ableitung neigt.

Die Auslegeschrift DE 1118996 betrifft ein Thermometer, das als Isolationsstück eine durchbohrte Glasdurchführung aufweist, über ein druckfestes Schutzrohr mit Halsrohr und Schraubstutzen verfügt und einen Messfühler aufweist, der in Kunstharz eingebettet ist und damit auch zu thermischer Ableitung neigt.

Die Patentschrift DE 859066 zeigt eine wärmeisolierende Führung, an die sich ein Federkörper anschließt, wobei ein thermischer Kontakt mittels Andrücken des Messelements erzielt werden soll, wobei jedoch auch hier thermische Ableitungseffekte aufgrund der verwendeten Materialien vorliegen.

Die Offenlegungsschrift DE 3721983 A1 zeigt ein Eintauchthermometer, bei dem ein ausreichender thermischer Kontakt mit dem Messmedium ausschließlich durch eine hohe Einbautiefe erzielt werden kann.

Die Patentschrift DE 4138460 C2 beschreibt ein evakuierbares Thermometer, das allerdings über eine thermisch ableitende Innenhalterung verfügt. Das dort vom Schutzrohr umschlossene Volumen ist zwar evakuierbar, indessen erzeugt die vorgeschlagene Halterung aus transparenter Keramik, messtechnisch störende thermischen Ableitungen.

In der Patentschrift EP 1831504 B1 werden thermisch isolierende Schichtanordnungen vorgeschlagen, die jedoch auch zu thermischen Ableitungen neigen.

Die Patenschrift DE 3330491 C2 beschreibt ein Thermoelement mit zwei in einer Schutzhülse zugentlastend aufgenommenen Drähten unterschiedlicher Werkstoffe, wie zum Beispiel Eisen und Konstantan, die als Thermopaar am Ende zur Messstelle hin leitend miteinander verbunden sind und mindestens im Bereich der Messstelle von einer Hülse aus hitzebeständigem Werkstoff umschlossen sind. Jedoch treten auch bei diesem Aufbau thermische Ableitungen auf.

Die Patentschrift DE 576734 nutzt ein nadelförmiges Thermoelement, wobei Thermoelemente in Form hohler Nadeln vorgesehen sind, die allerdings nur über eine begrenzte mechanische Stabilität verfügen und deren thermisches Ableitverhalten eine Eintauchtiefe voraussetzt, die mindestens das 6-fache des Sondendurchmessers beträgt.

Der Erfindung liegt somit die Aufgabe zugrunde, den thermischen Kontakt des Thermometers zum Prozess zu verbessern und gleichzeitig die Wärmeableitung und damit den Wärmeableitungsfehler eines Thermometers weiter zu verringern.

Die Aufgabe wird durch ein Thermometer, einen Behälter mit einem solchen Thermometer, und ein System umfassend ein Thermometer und einen Beutel bzw. einen Behälter gelöst.

Die Aufgabe wird hinsichtlich des Thermometers mit einem Schutzrohr und einem Schutzrohrinnenteil erfindungsgemäß dadurch gelöst, dass das Schutzrohrinnenteil dazu dient, die Leiterelemente auf der im eingebauten Zustand dem Schutzrohr zugewandten Seite des Schutzrohrinnenteils anzuordnen. Dadurch gelangen die Leiterelemente in besseren thermischen Kontakt mit dem Schutzrohr und damit mit der zu bestimmenden Temperatur eines Messstoffs bzw. der Temperatur eines Prozesses. Im Gegensatz dazu sind bei den aus dem Stand der Technik bekannten Messeinsätzen und Schutzrohrinnenteilen die Leiterelemente wenigstens teilweise innerhalb des Messeinsatzes geführt und treten nur im Bereich der Messstelle, an der bspw. ein temperaturabhängiges Widerstandselement oder die Kontaktstelle eines Thermoelements angeordnet ist, aus dem Messeinsatz oder dem Schutzrohrinnenteil heraus und thermisch mit dem Schutzrohr in Kontakt. Durch das vorgeschlagene Schutzrohrinnenteil werden die Leiterelemente aber bevorzugt wenigstens in einem Teilbereich und insbesondere im gesamten Bereich in dem die Leiterelemente von dem Schutzrohrinnenteil geführt werden, zwischen dem Schutzrohrinnenteil und dem Schutzrohr geführt, sind also an der im eingebauten Zustand auf der dem Schutzrohr zugewandten Seite des Schutzrohrinnenteils angeordnet. Dadurch kommt nicht nur die ggfs. vorhandene Messstelle sondern auch die Leiterelemente, die als Anschlussleitungen an die Messstelle dienen, an der sich der Sensor bzw. Messaufnehmer befindet, mit dem Schutzrohr zumindest abschnittsweise in thermischen Kontakt.

Bevorzugt werden gemäß einer Ausführungsform der Erfindung die Leiterelemente in dem gesamten Bereich, in dem sie mit dem Schutzrohrinnenteil in Berührung kommen bzw. durch dieses angeordnet sind und/oder geführt werden, auf der Außenseite, d.h. der im eingebauten Zustand dem Schutzrohr, genauer: der Innenseite des Schutzrohrs, zugewandten Seite des Schutzrohrinnenteils, angeordnet bzw. geführt. Das Schutzrohr kann dabei bspw. aus einem metallischen Material, insbesondere einem Edelstahl, bestehen, welches bevorzugt durch ein Tiefziehverfahren geformt ist.

Ferner ist es möglich, dass die Leiterelemente nur entlang eines Teilbereichs, insbesondere entlang der Längsachse des Schutzrohrinnenteils oder des Schutzrohrs, welcher Teilbereich zur Aufnahme der Leiterelemente dient, um die Leiterelemente in einer vorgegebenen Anordnung zu positionieren, durch das Schutzrohrinnenteil auf der im eingebauten Zustand dem Schutzrohr zugewandten Seite des Schutzrohrinnenteils angeordnet werden. Bspw. ist es möglich, dass die Leiterelemente teilweise, wie bspw. aus dem Stand der Technik bekannt, zunächst innerhalb des Schutzrohrinnenteils geführt werden. Alternativ können die Leiterelemente wenigstens teilweise auf einer Innenseite des Schutzrohrinnenteils geführt werden, bevor sie durch das Schutzrohrinnenteil hindurch auf die Außenseite des Schutzrohrinnenteils, also die im eingebauten Zustand dem Schutzrohr zugewandten Seite des Schutzrohrinnenteils, geführt und angeordnet werden.

Das Schutzrohrinnenteil ist dabei so ausgestaltet, dass es in einen durch das Schutzrohr gebildeten Hohlraum einbringbar ist. Der Hohlraum wird dabei bspw. durch die Innenseite des Schutzrohrs oder einen daran wenigstens in einem Teilbereich aufgebrachten Verguss oder eine Beschichtung begrenzt. Außerdem kann das Schutzrohrinnenteil, wie bereits erwähnt, an die Form der Innenseite des Schutzrohrs wenigstens in dem Bereich des geschlossenen Endes des Schutzrohrs an das Schutzrohr angepasst sein. Dadurch, dass die Form des Schutzrohrinnenteils, zumindest an seiner Außenseite, an die Form der Innenseite des Schutzrohrs angepasst ist und dass die Leiterelemente an der Außenseite des Schutzrohrinnenteils angeordnet sind, können die Leiterelemente in thermischen Kontakt mit dem Schutzrohr gebracht werden. Zudem können dadurch auch schnellere Ansprechzeiten auf Temperaturänderungen im Prozess erreicht werden, was insbesondere im Fall eines Temperaturmessaufnehmer eines Thermometers vorteilhaft ist.

Vorzugsweise werden die Leiterelemente bspw. durch das Schutzrohrinnenteil so angeordnet, dass sie zumindest in dem Bereich, in dem sie mit dem Schutzrohrinnenteil in Kontakt kommen oder durch das Schutzrohrinnenteil angeordnet werden, annähernd in einer Ebene liegen. In einer Ebene liegend bedeutet dabei, dass die durch den Verlauf der Leiterelemente gegebenen (Raum-)Kurven in einer Ebene liegen. Bevorzugt sind die Leiterelemente dabei so angeordnet, dass sie aus entgegengesetzten Richtungen, insbesondere entlang der Wandung des Schutzrohres, auf einander zulaufen. Dabei können sie durch das Schutzrohrinnenteil und/oder das Schutzrohr in der vorgenannten Anordnung angeordnet werden. Die Leiterelemente können in einem sich an den Raumabschnitt, in dem das Schutzrohrinnenteil angeordnet ist, entlang der Längsachse anschließenden Raumabschnitt, d.h. bevor die Leiterelemente durch das Schutzrohrinnenteil angeordnet werden, innerhalb des durch das Schutzrohr gebildeten Hohlraums wenigstens abschnittsweise parallel zueinander oder, insbesondere zugentlastet, (zwangs-)frei in dem Schutzrohr verlaufen,

In einer Ausgestaltung des Schutzrohrinnenteils weist das Schutzrohrinnenteil eine schalenartige Form auf. Das Schutzrohrinnenteil weist demnach bevorzugt eine Dicke auf, die im Vergleich zu den übrigen Ausmaßen des Schutzrohrinnenteils gering(er) ist. Bei dem insbesondere schalenartigen Schutzrohrinnenteil kann es sich also um einen Körper handeln, der korrespondierend zur Innenseite des Schutzrohres geformt ist. Das Schutzrohrinnenteil kann ferner zumindest abschnittsweise eine kugelschalenartige und/oder kegelschalenartige Form aufweisen. Vorzugsweise ist die schalenartige Form des Schutzrohrinnenteils an die Form des Schutzrohrs auf der Innenseite des Schutzrohrs, kurz: an die Innenseite des Schutzrohres, angepasst. Die an die Innenseite des Schutzrohrs angepasste Oberfläche des Schutzrohrinnenteils bildet dessen Außenseite, d.h. das Schutzrohrinnenteil ist wenigstens an seiner Außenseite an die Innenseite des Schutzrohrs angepasst. Ferner kann auch die Innenseite des Schutzrohrinnenteils korrespondierend, insbesondere parallel, zur Außenseite des Schutzrohrinnenteils geformt sein.

In einer Ausgestaltung wird die Innenseite des Schutzrohrs zumindest im Bereich des geschlossenen Schutzrohrendes vollständig durch das Schutzrohrinnenteil bedeckt. Das Schutzrohrinnenteil kann also so ausgestaltet sein, dass es passgenau an der Innenseite des Schutzrohr anliegt.

In einer weiteren Ausgestaltung ist das geschlossene Schutzrohrende vorzugsweise im Betriebsfall einem Messstoff ausgesetzt, und das Schutzrohrinnenteil ist an die korrespondierend geformte, insbesondere kuppelartige, Innenseite des Schutzrohrendes angepasst. Um bspw. Ablagerungen zu vermeiden, ist das dem im Betriebsfall dem Messstoff ausgesetzte Ende des Schutzrohrs zumindest in einem Teilbereich bspw. auf seiner Außenseite kugelförmig, oval oder glockenförmig ausgestaltet. Ferner kann auch die Innenseite des Schutzrohrs zumindest in dem Bereich des geschlossenen Endes des Schutzrohrs kugelförmig, oval oder glockenförmig ausgestaltet sein. Davon abweichend kann sich die Form des Schutzrohrs auf der Außenseite von der Form des Schutzrohrs auf der Innenseite unterscheiden. So kann das Schutzrohr auf der Außenseite im Bereich des geschlossenen Endes bspw. eine kreiszylindrische Form und auf der Innenseite eine kugelig, kuppelartige Form aufweisen.

In einer weiteren Ausgestaltung besteht das Schutzrohrinnenteil aus einem wärmeleitfähigen und/oder elektrisch bzw. dielektrisch isolierenden Material, insbesondere einer Keramik. Das Schutzrohrinnenteil kann entweder in direktem thermischen Kontakt, bspw. indem es am Schutzrohr anliegt, oder indirektem thermischen Kontakt, bspw. über ein wärmeleitfähiges Vergussmaterial, mit dem Schutzrohr stehen. Der thermische Kontakt zum Prozess und dem Messstoff ist dabei unter anderem von der thermischen Leitfähigkeit des Materials aus dem das Schutzrohr besteht abhängig. Ferner kann das Schutzrohrinnenteil zur elektrischen oder dielektrischen Isolierung und/oder Führung der Leiterelemente dienen. Dadurch kann einerseits bspw. ein elektrischer Kurzschluss der Leiterelemente vermieden werden, andererseits tragen bei dielektrischen Materialien nur Gitterschwingungen in dem Material zum Wärmetransport bei, wodurch wiederum die thermische Isolierung des Prozesses gegenüber der Prozessumgebung verbessert wird.

Ferner kann sich das Schutzrohrinnenteil nicht nur auf der Innenseite des Schutzrohres im Bereich des geschlossenen Endes des Schutzrohres erstrecken, und eine mit der Form der Innenseite des Schutzrohrs korrespondierende Form aufweisen, sondern das Schutzrohrinnenteil kann sich über die gesamte Länge des Schutzrohres oder wenigstens über einen Teilbereich entlang der Längsachse des Schutzrohrs in dem Schutzrohr erstrecken und dabei eine mit der Innenseite des Schutzrohr korrespondierende Form aufweisen, vorzugsweise die Innenseite des Schutzrohr bedecken, d.h. an des Innenseite des Schutzrohrs anliegen.

In einer weiteren Ausgestaltung weist das Schutzrohrinnenteil, insbesondere zumindest auf der im eingebauten Zustand vom Schutzrohr abgewandten Seite, d.h. seiner Innenseite, eine metallische oder glaskeramische Beschichtung auf. Das Schutzrohrinnenteil kann darüber hinaus wenigstens in einem Teilbereich auf seiner Innenseite und/oder Außenseite über eine derartige Beschichtung verfügen. Bevorzugt ist aber im Wesentlichen zumindest die Innenseite und die Außenseite des Schutzrohrinnenteils und besonders bevorzugt das gesamte Schutzrohrinnenteil mit der vorgeschlagenen metallischen oder glaskeramischen Beschichtung versehen. Diese Beschichtung dient dazu, Wärmestrahlung wenigstens im Infrarot und/oder im Nicht-Infrarotbereich zu reflektieren. Anstelle eines Metalls oder einer Glaskeramik können auch andere zu diesem Zweck geeignete Materialien verwendet werden. Durch die vorgeschlagene Beschichtung wird die von dem Schutzrohr übertragene Wärme reflektiert, so dass erstens die Leiterelemente, die ja zwischen dem Schutzrohrinnenteil und dem Schutzrohr selbst angeordnet sind, eine bessere thermische Anbindung an den Prozess erfahren, da die Wärme zumindest teilweise nicht abgeleitet sondern reflektiert wird und zweitens die im Prozess vorhandene Wärme nicht oder nur im verringerten Maße in die Prozessumgebung gelangen kann, da durch die Reflektion zumindest eines Teils der Wärmestrahlung die thermische Isolierung zwischen dem Prozess und der Prozessumgebung im Bereich des Schutzrohrs, in dem das Schutzrohrinnenteil eingebracht ist, verbessert wird.

Die vorgeschlagene thermisch reflektierende Beschichtung kann zudem in einem Bereich auf der Innenseite des Schutzrohres angebracht sein, welcher Bereich nicht durch das Schutzrohrinnenteil bedeckt ist, wenn das Schutzrohrinnenteil in das Schutzrohr eingebracht ist. Dadurch kann ansonsten in das Innere des Schutzrohres eindringende Wärmestrahlung in den Prozess bzw. den Messstoff zurück in den Prozess reflektiert werden. Da in dem Bereich in dem das Schutzrohrinnenteil das Schutzrohr bedeckt, keine thermisch reflektierende Beschichtung vorgesehen ist, kann die Wärme über das Schutzrohr an die Messstelle eindringen. Da das Schutzrohrinnenteil jedoch auch wenigstens eine Wärme reflektierende Schicht aufweisen kann, kann zumindest ein Teil der Wärmestrahlung wieder zurück in den Prozess reflektiert werden.

In einer weiteren Ausgestaltung weist das Schutzrohrinnenteil Führungselemente auf, die dazu dienen, die Leiterelemente in einer vorgesehenen Anordnung anzuordnen, vorzugsweise sind die Leiterelemente, insbesondere passgenau, in die Führungselemente einbringbar. Alternativ dazu weist anstelle des Schutzrohrinnenteils das Schutzrohr die vorgeschlagenen Führungselemente auf. Außerdem können die vorgeschlagenen Führungselemente zum Anordnen der Leiterelemente sowohl am Schutzrohr als auch am Schutzrohrinnenteil vorgesehen sein. Bevorzugte Anordnungen, in welcher die Leiterelemente durch die Führungselemente anordenbar sind, wie bspw. diejenige in der die Leiterelemente in einer Ebene entlang der Wandung des Schutzrohr insbesondere aus entgegengesetzten Richtungen aufeinander zulaufen, wurden oben bereits genannt.

In einer weiteren Ausgestaltung bestehen die Führungselemente aus wenigstens einer Ausnehmung, insbesondere wenigstens einer Einfräsung oderwenigstens einer Einkerbung, in dem Schutzrohrinnenteil zur Aufnahme der Leiterelemente. Anstatt in dem Schutzrohrinnenteil können die Einkerbung(en) und/oder die Einfräsung(en) auch in dem Schutzrohr vorgesehen sein, wobei das Schutzrohrinnenteil dann dazu verwendet werden kann, die Leiterelemente in der Einkerbung(en) und/oder die Einfräsung(en) zu positionieren, indem diese bspw. durch das Schutzrohrinnenteil abgedeckt werden. Die Ausnehmung kann dabei eine der Form der Leiterelemente korrespondierende Form und/oder Größe aufweisen. Durch das Schutzrohrinnenteil können die Leiterelemente dann in die Ausnehmung gepresst bzw. darin eingeschlossen werden. Um ein Spiel der Leiterelemente ein den Ausnehmungen zu verhindern können diese zusätzlich mit einem Vergussmaterial aufgefüllt werden.

Hinsichtlich des Thermometers wird die Aufgabe dadurch gelöst, dass das Thermometer ein Schutzrohr und ein Schutzrohrinnenteil nach einer der vorherigen Ausgestaltungen aufweist. Durch die verbesserte insbesondere thermisch isolierende Wirkung gegenüber der Prozessumgebung durch das Schutzrohrinnenteil, kann auch ein in seinen Isolationseigenschaften verbessertes Thermometer hergestellt werden. Das Thermometer kann außer dem Schutzrohr auch ein sog. Halsrohr und/oder einen sog. Gehäusekopf aufweisen. Das Halsrohr ist dabei ggfs. zwischen dem Schutzrohr und dem Gehäusekopf an dem prozessabgewandten Ende des Schutzrohrs angeordnet, und von dem Schutzrohr durch zumindest eine Abdeckung getrennt. Der Gehäusekopf enthält bspw. eine Mess- und/oder Betriebselektronik, die mit den Leiterelementen verbunden ist und zur Verarbeitung eines über die Leiterelemente übertragenen Messsignals dient. Die Leiterelemente können dabei über das Halsrohr von dem Schutzrohr in den Gehäusekopf geführt werden.

In einer Ausgestaltung des Thermometers bilden die Leiterelemente ein Sensorelement oder mehrere Sensorelemente. Bspw. kann ein erstes Leiterelement mit einem zweiten Leiterelement über eine sog. Kontaktstelle verbunden sein und ein Thermoelement bilden. Das von dem wenigstens einen Sensorelement aufgenommene Messsignal bzw. die Messsignale können über die Leiterelemente insbesondere an die Mess- und/oder Betriebselektronik übertragen werden. Die Leiterelemente können auch zum Anschließen des Sensorelementes sowie zur Übertragung eines von dem Sensorelement aufgenommenen Messsignals dienen.

Die Messstelle, die durch die Position des Sensorelements vorgegeben ist, befindet sich bevorzugt an dem geschlossenen Schutzrohrende an einer Stelle zwischen den Leiterelementen in einem Raumabschnitt des Thermometers in dem die Leiterelemente durch das Schutzrohrinnenteil in einer vorgegebenen Anordnung zwischen dem Schutzrohrinnenteil und dem Schutzrohr angeordnet sind.

In einer weiteren Ausgestaltung des Thermometers handelt es sich bei dem Sensorelement um mindestens ein Thermoelement oder mindestens ein temperaturabhängiges Widerstandselement. Es können auch mehrere Leiterelemente und/oder Sensorelemente vorgesehen sein. Bspw. können mehrere, insbesondere mehr als zwei Leiterelemente vorgesehen sein, durch die dann mehrere Thermoelemente gebildet werden. Bspw. kann auch ein temperaturabhängiges Widerstandselement über mehrere, insbesondere zwei, drei oder vier Leiterelemente, die als Anschlussleitungen dienen, verfügen. Diese Anschlussleitungen können dann durch das Schutzrohrinnenteil wie vorgeschlagen angeordnet werden.

In einer weiteren Ausgestaltung des Thermometers sind die Leiterelemente so auf der im eingebauten Zustand dem Schutzrohr zugewandten Seite des Schutzrohrinnenteils anordenbar, dass die Leiterelemente in, insbesondere direktem, thermischen Kontakt mit dem Schutzrohr stehen. Es kann somit eine Presspassung, eine Spielpassung, eine Übergangspassung oder eine Übermaßpassung gemäß DIN 7157 zwischen den Leiterelementen und dem Schutzrohrinnenteil und/oder dem Schutzrohr selbst vorgesehen sein. Um einen ggfs. vorhandenen Bewegungsfreiraum der Leiterelemente in der Passung zu verhindern kann wie bereits erwähnt ein Vergussmaterial vorgesehen sein, durch das der Bewegungsfreiraum ausgefüllt wird, wodurch, insbesondere in dem Fall eines aushärtenden Vergusses, eine steifere Anordnung der Leiterelemente und eine verbesserte Vibrationsfestigkeit des Thermometers erreicht wird. In einer weiteren Ausgestaltung des Thermometers stehen die Leiterelemente daher über das Vergussmaterial in thermischem Kontakt mit dem Schutzrohr. Die Leiterelemente können zumindest teilweise und wenigstens in dem Bereich, in dem sie durch das Schutzrohrinnenteil angeordnet sind, in das Vergussmaterial eingebettet sein. Das Vergussmaterial kann also einerseits zur thermischen Kontaktierung als auch zur Festigung der Einbauposition der Leiterelemente und/oder des Schutzrohrinnenteils dienen.

In einer weiteren Ausgestaltung des Thermometers ist das Schutzrohrinnenteil mit der Innenseite des Schutzrohres kraftschlüssig, insbesondere per Federkraft, verbunden. Anstelle oder zusammen mit einer mechanischen Verbindung, per Federkraft, kann das Schutzrohrinnenteil auch durch einen Klebstoff an dem Schutzrohr befestigt werden. Dabei kann das erwähnte Vergussmaterial als Klebstoff dienen. Durch die kraftschlüssige Verbindung zwischen dem Schutzrohrinnenteil und dem Schutzrohr können die Leiterelemente und ferner der an die Leiterelemente angeschlossene oder der durch sie gebildete Messaufnehmer, auch als Sensor oder Sensorelement bezeichnet, gehaltert werden.

In einer weiteren Ausgestaltung des Thermometers sind die Leiterelemente vermittels des Schutzrohrinnenteils zwischen der Wandung des Schutzrohrs und der Wandung des Schutzrohrinnenteils angeordnet. Die Leiterelementen sind dann in dem Bereich in dem sie durch das Schutzrohrinnenteil geführt werden, in einem Kanal dessen Wandung einerseits aus der Wandung des Schutzrohrinnenteils und andererseits aus der Wandung des Schutzrohres besteht, angeordnet. Der Kanal kann dabei aus einer Ausnehmung in dem Schutzrohrinnenteil und/oder dem Schutzrohr selbst bestehen.
In einer weiteren Ausgestaltung des Thermometers ist der durch das Schutzrohr gebildete Hohlraum evakuierbar oder evakuiert. Durch die Evakuierung des Hohlraums des Schutzrohres ist eine Wärmeübertragung nur noch durch Wärmestrahlung möglich. Von Vorteil ist dabei weiterhin, wenn die Leiterelemente entweder frei, insbesondere zugentlastet, sich in dem Hohlraum bis zu dem Schutzrohrinnenteil erstrecken.

In einer weiteren Ausgestaltung des Thermometers sind innerhalb des Schutzrohrs mehrere Lammellen, insbesondere parallel zueinander, angeordnet. Die Lammellen, bei denen es sich bspw. um längliche dünne Scheiben handelt, können dazu dienen, eine ggf. im Inneren des Schutzrohres vorhandene thermische Strahlung zu verringern. Zu diesem Zweck können die Lammellen aus einem geeigneten Material bestehen oder mit einem geeigneten Material beschichtet sein, durch das die in dem Hohlraum des Schutzrohrs ggfs. vorhandene Wärmestrahlung reflektiert wird. Die Lammelen können dabei bspw. so in dem Hohlraum, insbesondere in einem Raumabschnitt, der sich, insbesondere entlang der Längsachse des Schutzrohrs, an den Raumabschnitt in dem sich das Schutzrohrinnenteil im eingebauten Zustand befindet, anschließt, angeordnet sein, dass sie sich entlang eines Querschnitts, insbesondere senkrecht und/oder parallel zur Längsachse des Schutzrohrs, durch das Schutzrohr erstrecken.

In einer weiteren Ausgestaltung des Thermometers ist das Schutzrohr an einem seiner Enden durch eine Abdeckung verschlossen, durch die hindurch die Leiterelemente geführt sind. Vorzugsweise handelt es sich dabei um das im eingebauten Zustand von dem Prozess abgewandte Ende des Schutzrohrs, das durch die Abdeckung verschließbar ist. Besonders bevorzugt werden nur die Leiterelemente durch die Abdeckung hindurch, bspw. in das Halsrohr oder direkt den Gehäusekopf, geführt. Da erfindungsgemäß kein Messeinsatz mit einem massiven Körper innerhalb dessen die Leiterelemente angeordnet sind verwendet wird, können dementsprechend die Öffnungen in der Abdeckung zur Aufnahme der Leiterelemente ausreichend klein, d.h. vorzugsweise annähernd dem Durchmesser der Leiterelemente entsprechend, ausgelegt werden. Es ist außer dem Schutzrohr daher keine Verbindung zwischen dem Prozess und der Prozessumgebung vorhanden, die zu einer Wärmeleitung zwischen Prozess und Prozessumgebung beiträgt. Daher wird der gegenüber den aus dem Stand der Technik bekannten Messeinsätzen hervorgerufene Nachteil der Wärmeableitung verringert. Vielmehr sind durch die vorgeschlagene Erfindung nunmehr Schutzrohre sowie Thermometer mit solchen Schutzrohren herstellbar und verwendbar, deren Länge im Wesentlichen ihrem Durchmesser entspricht.

In einer weiteren Ausgestaltung kann auch zumindest die dem Hohlraum des Schutzrohres zugewandte Seite der Abdeckung zumindest teilweise mit der o.g. thermisch reflektierenden Beschichtung, die bspw. aus einem Metall oder einer Glasskeramik besteht, versehen sein. Wird dies bspw. mit den vorgeschlagenen Lammellen und/oder der thermisch reflektierenden Beschichtung des Schutzrohrinnenteils und/oder der Innenseite des Schutzrohr die nicht von dem Schutzrohrinnenteil bedeckt ist kombiniert ergibt sich ein eine zunehmend verbesserte thermische Isolation der Prozessumgebung gegenüber dem Prozess.

Durch die vorgeschlagene Erfindung kann somit nicht nur die Einbautiefe des Schutzrohres, d.h. dessen Länge verkürzt, sondern auch die thermische Isolation zwischen dem Prozess und der Prozessumgebung verbessert werden. Oftmals weisen aus dem Stand der Technik bekannte Thermometer wie oben erwähnt, an der dem Prozess abgewandten Seite der Abdeckung entweder direkt oder über ein Halsstück verbunden einen sog. Messumformer auf, der die Mess- und/oder Betriebselektronik enthält und in dem Gehäusekopf untergebracht ist. Dieser Messumformer enthält u.a. zur Messsignalverarbeitung Elektronikteile, die nur bis zu einer bestimmten Grenztemperatur fehlerfrei funktionieren und deren Lebensdauer von der Höhe der mittleren Temperatur, der sie ausgesetzt sind, abhängt.

In einer weiteren Ausgestaltung des Thermometers ist in der Abdeckung eine Einrichtung zur Bestimmung des Drucks in dem Schutzrohr vorgesehen, oder in der Abdeckung sind Zuleitungen zu einer solchen Einrichtung vorgesehen. Dadurch lässt sich eine Leckage des Schutzrohrs einfach bestimmen. Insbesondere für den Fall, dass der durch das Schutzrohr gebildete Hohlraum evakuiert ist, lässt sich eine Druckänderung leicht bestimmen.

In einer weiteren Ausgestaltung des Thermometers weist das Schutzrohrende an seiner Außenseite eine kuppelartige Form auf, ist also bspw. halbkugel- oder glockenförmig.

In einer weiteren Ausgestaltung des Thermometers weist das Schutzrohr und/oder das Schutzrohrinnenteil an seiner Außenseite zumindest im Bereich des im Betriebsfall dem Messstoff ausgesetzten Schutzrohrendes eine metallische Beschichtung, insbesondere aus Gold oder Chrom, auf. Durch die Beschichtung kann das Schutzrohr bzw. das Schutzrohrinnenteil vor Verzunderung und Verfärbung geschützt werden. Ferner wird durch die metallische Beschichtung die Temperaturübertragung zwischen Schutzrohr und Messeinsatz optimiert. Ferner kann durch die Beschichtung mit Chrom oder Gold die Verwechslungsgefahr von Schutzrohren oder Messeinsätzen insbesondere Schutzrohrinnenteilen verringert werden. Durch die vorgeschlagene Beschichtung an dem Schutzrohr kann zudem das Anhaften des Messstoffs an dem Schutzrohr und damit Korrosion verringert werden.

Hinsichtlich des Behälters wird die Aufgabe dadurch gelöst, dass der Behälter wenigstens ein Thermometer nach zumindest einer der vorherigen Ausgestaltungen aufweist, und wobei der Behälter ein Aufnahmeteil zur Aufnahme zur Aufnahme des Thermometers aufweist, welches Ausnahmeteil Bestandteil einer Wandung des Behälters ist. Somit kann ein Behälter geschaffen werden, der ein oder mehrere Schutzrohre zur Aufnahme jeweils eines oder mehrere Thermometer aufweist. Durch die geringe benötigte Einbautiefe des vorgeschlagenen Thermometers können die benötigten Schutzrohre somit direkt in der Wandung des Behälters untergebracht werden oder auf der Innenseite des Behälters aus der Wandung hervorstehen.

Hinsichtlich des Systems wird die Aufgabe dadurch gelöst, dass das System einen Beutel oder einen Behälter mit einer wenigstens abschnittsweise flexiblen Wandung zur Aufnahme eines Messstoffs und einem Thermometer nach zumindest einer der vorherigen Ausgestaltungen aufweist, wobei das Thermometer in ein Aufnahmeteil des Beutels oder des Behälters einbringbar ist, so dass es wenigstens abschnittsweise bündig an dem Beutel bzw. der flexiblen Wandung des Behälters anliegt.

In einer Ausgestaltung des Systems weist das Aufnahmeteil zur Befestigung des Thermometers Befestigungselemente auf, durch die das Thermometer, bevorzugt kraftschlüssig, mit dem Beutel verbunden ist oder verbindbar ist.

Die Erfindung wird anhand der nachfolgenden Zeichnungen näher erläutert. Es zeigt:
Fig. 1: eine schematische Darstellung eines Querschnitts durch ein Thermometer mit einem Schutzrohr und einem Schutzrohrinnenteil,
Fig. 2: eine schematische Darstellung eines Querschnitts durch ein Thermometer mit einem Schutzrohr und einem Schutzrohrinnenteil, wobei zusätzlich Lammellen in dem von dem Schutzrohr gebildeten Hohlraum vorgesehen sind,
Fig. 3: eine schematische Darstellung eines Querschnitts durch ein Schutzrohrinnenteil mit einem Thermoelement,
Fig. 4: eine schematische Darstellung eines Querschnitts durch ein Schutzrohrinnenteils mit einem temperaturabhängigen Widerstandselement, und
Fig. 5: eine schematische Darstellung eines Querschnitts durch ein Thermometer mit einem Schutzrohr und einem Schutzrohrinnenteil, wobei zusätzlich eine Berstscheibe bzw. ein Durchschlagventil und ein Dosenmanometer in der Abdeckung des Schutzrohrs vorgesehen sind, und
Fig. 6: eine schematische Darstellung eines Querschnitts durch einen Behälter mit einer Wandung, wobei ein Schutzrohr mit geringer Einbautiefe Bestandteil der Wandung des Behälter ist, und
Fig. 7: eine schematische Darstellung eines Querschnitts durch einen Beutel, der eine flexible Wandung aufweist, wobei Haltemittel vorgesehen sind, vermittels denen ein Thermometer an dem Beutel befestigt ist, und
Fig. 8 a), b), c): jeweils eine schematische Darstellung eines Querschnitts durch eine Fühlerspitze eines Thermometer.

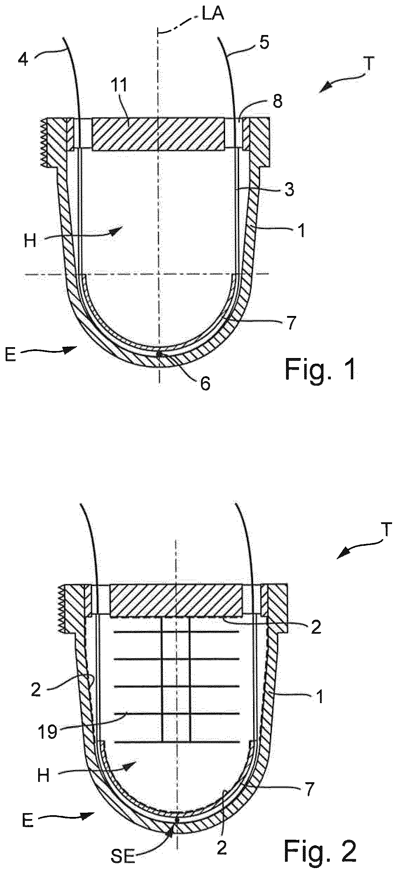

Figur 1 zeigt ein Thermometer T bestehend aus einem Schutzrohr 1, das vorzugsweise aus einem Metall, einer Keramik oder einem anderen geeigneten Werkstoff besteht und über ein an das mediumsseitige Schutzrohrende E angepasstes schalenartiges Schutzrohrinnenteil 7 verfügt, wobei dass Schutzrohrinnenteil 7 aus einer wärmeleitfähigen, dielektrisch isolierenden Keramik besteht und formschlüssige Einfräsungen bzw. Einkerbungen, nicht gezeigt, zur Aufnahme der Thermoschenkelableitungen 4, 5 oder der Widerstandsanschlüsse 13, 16 aufweist. Das Schutzrohr 1 kann bspw. durch ein Tiefziehverfahren hergestellt werden.

Zusätzlich besitzt das Schutzrohrinnenteil 7 Aussparungen in die eine Thermoelementkontaktverbindung 6 oder ein Widerstandsmesselement 17 mit gutem thermischem Kontakt zum Schutzrohrinnenteil 7 aufgenommen wird.

Der gesamte übrige von dem Schutzrohr 1 umschlossene Hohlraum H kann wie in Figur 2 gezeigt, ebenso über die im Nicht-Infrarot- und/oder Infrarot-Bereich reflektierende metallische Beschichtung 2 verfügen. Das diffusionsdicht vom Schutzrohr 1 umschlossene Volumen, das den Hohlraum H bildet, ist bekanntermaßen, wie in der Patentschrift DE 4138460 C2 beschrieben evakuierbar, indessen schafft die vorliegende Erfindung durch den schalenartigen Aufbau aus dem Schutzrohrinnenteil 7 und dem mediumsseitigen bzw. prozessseitigen Schutzrohrende E bei guter thermischer Kontaktierung des eingebetteten Sensorelements SE als auch eingebetteten Leiterelementen, die zum Anschließen des Sensorelements SE dienen, Vorteile, durch welche die Messeigenschaften des Thermometers T unter Vermeidung der bspw. aus der Patentschrift DE 4138460 C2 beschriebenen Halterung aus transparenter Keramik mit nachteiligen thermischen Ableitungseigenschaften verbessert werden.

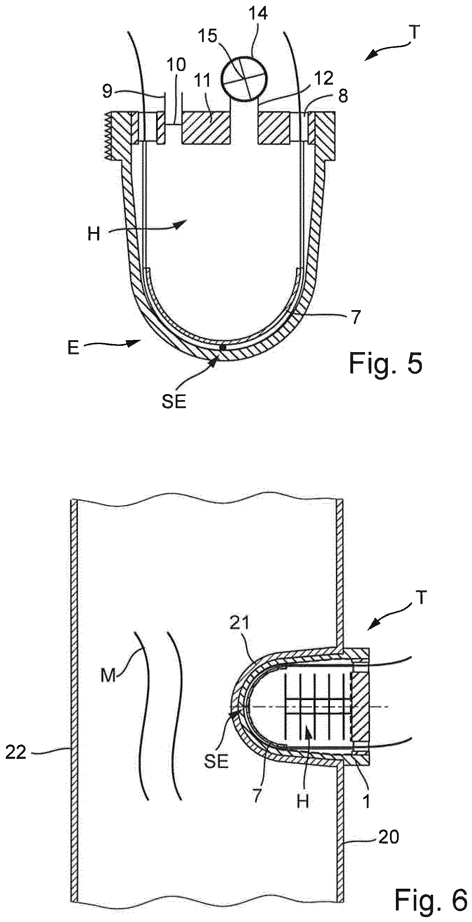

Die relativ geringe Wärmekapazität der Wandung des Schutzrohrs 1 verknüpft mit der guten thermischen Einbettung des wenigstens einen Sensorelements SE und der als Zuleitungen dienenden Leiterelemente 4, 5 und der im Vakuum nicht vorhandenen Wärmeableitung, (unter Normaldruck mittels Gas-Wärmeleitung und Gas-Konvektion), wobei die thermisch reflektierende Beschichtung 2 die im Vakuum vorhandenen Abstrahleffekte begrenzen, führt zu einem raschen Ansprechen der Sensorelemente entsprechend der Messstofftemperatur, wobei eine sonst durch innere Wärmeableitungseffekte hervorgerufene Sensorträgheit vermieden wird. Aufgrund dieser vorteilhaften Eigenschaften kann eine wesentlich kompaktere Schutzrohrbauform geschaffen werden, wobei insbesondere für die Einbautiefe nicht das mindestens 6-fache des Schutzrohrdurchmessers zur Vermeidung thermischer Ableiteffekte vorzusehen ist, so dass bei demselben Schutzrohrdurchmesser kleinere, den Prozessdurchfluss weniger störende Einbautiefen möglich sind. Die geringere Einbautiefe trägt in vorteilhafter Weise dazu bei, den Strömungswiderstand zu reduzieren, wobei geringere mechanische Belastungen im Fall eines fluiden Messstoffs M auftreten und somit zusätzliche Armierungen bzw. Mittel zum Erreichen einer genügenden Vibrationsfestigkeit vermieden werden können. Bei dem im Nennbetriebszustand evakuierten Schutzrohr 1 wird im Fall einer auftretenden Leckage der Messstoff M zunächst in das Innere des Schutzrohrs 1 eindringen, wobei gleichzeitig eine Undichtigkeitsanzeige mittels bspw. des Dosenmanometers 14 erfolgt, das beispielsweise den Vakuumverlust anzeigt, wie in Figur 5 gezeigt. Sollte nach dieser Warnphase, bei der Messstoff M noch nicht an die Umwelt abgegeben werden, die Leckage weiterhin bestehen, wird das weitere beispielsweise druckbeaufschlagte Eindringen des Messstoffs M mittels einer Überdruckanzeige am Dosenmanometer 14 angezeigt. Erst in der Folge kann dann über eine Berstscheibe 10 bzw. über ein Durchschlagsventil der Messstoff M aus dem Schutzrohr 1 austreten, welcher dann über ein am Anschlussstutzen 9 sich befindendes Ableitrohr gezielt in einen Entsorgungsbereich abgeführt werden kann.

Figur 1 zeigt einen Querschnitt durch ein Thermometer T mit den eingebetteten Thermoschenkeln 4, 5 und der Thermoelementverbundstelle 6, wobei die Themoelementverbundstelle 6 in einer Ebene mit den Thermoschenkeln 4, 5 ausgerichtet ist, wodurch eine vorteilhafte mechanische und thermisch leitende Anpassung an das Schutzrohrinnenteil 7 geschaffen wird. Die druck- und vakuumdichte Durchführung 8 zur Aufnahme der Thermoelementschenkel 4, 5 verhindert primär das Austreten des Messstoffs M im Falle einer Schutzrohrleckage. Beispielsweise sind als Durchführungsmaterialien Glasdurchführungen geeignet, die sich insbesondere zur Aufnahme von Platin / Platin-Rhodium-Thermoelementschenkel 4, 5 eignen.

Figur 2 zeigt ferner einen Querschnitt durch das Schutzrohr 1 eines Thermometers T mit den kaskadenartig angeordneten Abschirmlamellen 19 mit denen die im Vakuum vorherrschende thermische Abstrahlung wirksam zu vermindern ist. Im nichtevakuierten gasgefüllten Raum dominiert thermische Konvektion bzw. Wärmeleitung in Festkörpern. Jede reflektierende Abschirmlamelle 19 wirkt mittels des restlich aufgenommen Strahlungsanteils ihrerseits als Emitter, wobei maximal jeweils ca. die Hälfte in Richtung des Gehäusekopfes, nicht gezeigt, abgegeben wird und damit eine Gesamtabschwächung als abnehmende geometrische Reihe resultiert. Die Abschirmlammelen 19 können dabei aus einem geeigneten Material bestehen oder mit einer metallischen und/oder glaskeramischen Beschichtung 2 versehen sein. Zudem kann wie in Figur 2 gezeigt diese Beschichtung 2 wenigstens in einem Teilbereich der Innenseite des Schutzrohrs 1 und einer Abdeckung 11 des Schutzrohrs 1 vorgesehen sein. Ferner kann auch die Innenseite des Schutzrohrinnenteils 7 mit dieser Beschichtung 2 versehen sein. Das Schutzrohrinnenteil 7 kann aber auch an seiner Außenseite zumindest in dem Bereich in dem die Leiterelemente 4, 5 und oder das Sensorelement SE angeordnet sind, mit der Beschichtung 2 versehen sein.

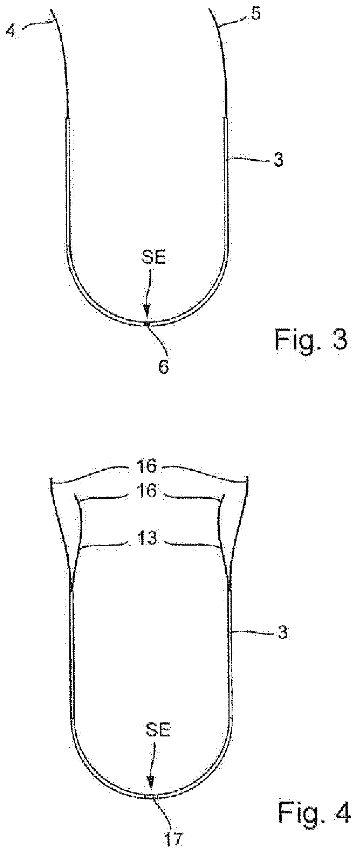

Ferner zeigt Figur 3 einen ersten Themoelementschenkel 4 und einen zweiten Themoelementschenkel 5, die in einer Ebene in der z.B. mineralisierten Mantelisolation 3 eingebettet an der Thermoelementkontaktverbindung 6 zusammengeführt werden und im Gegensatz zur üblicherweise verwendeten Thermometer-Fühlerpitzen-Konfiguration aufgrund der isothermen Führung zwischen dem Schutzrohr 1 und dem Schutzrohrinnenteil 7 keinen störenden Temperaturgradienten aufweisen und darüber hinaus über eine vorteilhafte stabile mechanische, vibrationsfeste und isotherme, spannungsfreie Einbettung verfügen, verbunden mit günstigen, rasch ansprechenden Messeigenschaften.

Figur 4 zeigt die Widerstandsanschlüsse 13 für 2-Leiteranschlüsse bzw. die Widerstandsanschlüsse 16 für 4-Leiteranschlüsse die in der z.B. mineralisierten Mantelisolation 3 eingebettet sind und in 2-Leiter- bzw. in 4-Leiter-Anschlusstechnik an ein temperaturabhängiges Widerstandsmesselement 17 angeschlossen werden, wobei aufgrund der isothermen Führung zwischen dem Schutzrohr 1 und dem Schutzrohrinnenteil 7 keine störenden Temperaturgradienten entstehen und eine vorteilhafte hochstabile mechanische und thermische Einbettung geschaffen wird, verbunden mit günstigen, rasch ansprechenden Messeigenschaften.

Durch das Schutzrohrinnenteil 7 können die Thermoschenkel 4, 5 bzw. die Widerstandsanschlüsse 13, 16 entsprechend der Anordnung in Figur 3 und 4 angeordnet werden und dadurch die genannten Vorteile erzielt werden.

Figur 5 zeigt einen Längsschnitt durch das Schutzrohr 1 eines Thermometers T mit einem Evakuierungs- und Ableitrohr 9 und einer darin integrierten Berstscheibe 10. Anstelle der Berstscheibe 10 kann aber auch ein Durchschlagsventil integriert sein, das beim Erreichen des Grenzbetriebsdruckes, für den das Schutzrohr 1 ausgelegt ist, tätig wird. Das nach außen weisende Endstück des Evakuierungsrohrs nimmt ein Ableitungsrohr 9 auf, wodurch der Messstoff abgeleitet werden kann, ohne dass der Messstoff M beim Überschreiten des Nennbetriebsdruckes in die Umgebung freigesetzt würde. Zur Anzeige des Betriebszustandes dient das modifizierte Dosenmanometer 14, das anstelle einer üblichen Zeigeranzeige bspw. über reflektierende Scheibenelemente verfügt, die gut sichtbar sowohl das Einbrechen des Schutzrohr-Vakuums (mit beispielsweise orange eingefärbtem, reflektierendem Segment) signalisieren und darüber hinaus zum sichtbaren Nachweis unzulässiger Druckbeaufschlagungen dienen (mit beispielsweise rot eingefärbtem, reflektierendem Segment). Das in Figur 5 gezeigte Thermometer T kann analog zu dem Thermometer T gemäß dem Ausführungsbeispiel in Figur 2 über eine metallische oder glaskeramische Beschichtung 2 verfügen.

Figur 6 zeigt eine Rohrleitung 20 oder einen Behälter mit einer Rückwand 22, der über eine angepasste Wandeinziehung 21 ein Thermometer T mit gutem thermischem Kontakt aufnimmt. Anstatt der in Figur 6 gezeigten konisch auf einen Kugelkopf zulaufen Wandeinziehung 21 sind alternative Gestaltungsformen bspw. in Form einer zylindrischen Einziehung, einer prismatischen Einziehung 21, eines gewundenen Schraubteils und/oder bspw. korkenzieherartig möglich. Die Wandeinziehung 21 dient dabei als Schutzrohr gegenüber dem Messstoff M in dem Behälter mit der Rückwand 22. Das Thermometer T weist ein Schutzrohr 1 auf, das in das als Aufnahmeteil für das Schutzrohr 1 des Thermometers T dienende Schutzrohr-Gegenstück, d.h. die Wandeinziehung 21, einsetzbar ist. Dieses Schutzrohr-Gegenstück dient also als Aufnahmeteil und besteht vorteilhaft aus dem Rohr- bzw. Behältermaterial.

Mit der in Figur 6 gezeigten Ausführung geht ein guter thermischer Kontakt einher, wobei eine störungsanfällige Schutzrohrabdichtung mit drohender Leckageneigung vermieden wird. Ferner wird das bereits vorhandene messstoff- und prozessspezifisch ausgelegte abrasions- und aggressionsbeständiges Rohr- bzw. Behältermaterial selbst als zusätzliches Schutzrohr genutzt. Das in einer Ausführungsform gemäß Figur 1, 2 oder 5 gezeigte Thermometer T kann in ein solches Aufnahmeteil, das bspw. aus einer Wandeinziehung 21 besteht, eingesetzt werden.

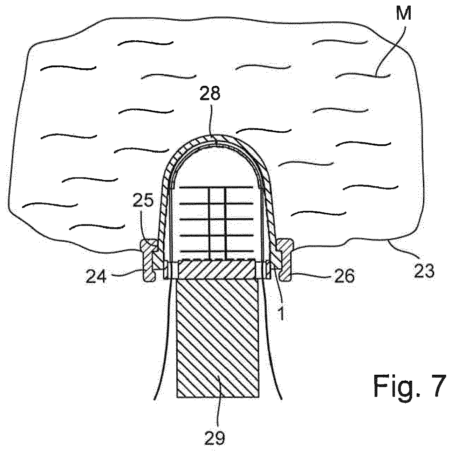

Figur 7 zeigt einen Kunststoffbeutel 23 der mit dem Messstoff M befüllt ist, dessen Temperatur mittels des Thermometers T, das über ein bspw. konisch geformtes Schutzrohr 1 verfügt, gemessen wird. An dem mittels des im Kunststoffbeutel 23 integrierten z.B. ringförmigen Beutelhalteteils 24 liegt ein Segment 28 des Kunststoffbeutels 23 bündig an, wobei das ringförmige Beutelhalteteil 24 eine Anschlagskante 25 aufweist, an der das Schutzrohr 1 anliegt und mittels des Halteteils 29 in die ringförmige Rastnase 26 eingesetzt werden kann. Das Halteteil 29 kann durch verschiedene Befestigungsarten wie beispielsweise Verschraubungen, Bügel, Rastnasen realisiert sein. Durch Form des Schutzrohres 1 werden beim Einbringen des Schutzrohres in das Segment 28 Lufteinschlüsse vermieden, so dass die Temperatur des Messstoffs M fehlerfrei bestimmt werden kann. Anstatt der konischen Form kann das Schutzrohr 1 auch eine (halb-) kugelförmige, ovale, glockenförmige oder andere zum vermeiden von Lufteinschlüssen zwischen dem Schutzrohr 1 und dem Segment 28 des Behälters 23 geeignete Form aufweisen.

Auch in dem in Figur 7 gezeigten Ausführungsbeispiel ergibt sich ein gegenüber dem Stand der Technik verbesserter thermischer Kontakt, sowie eine rasche Wechselbarkeit des Thermometers T, wobei kein Verlust der Sterilität, wie sie bspw. bei Pharma oder Biotech-Anwendungen erforderlich ist, auftritt, das das Thermometer T nicht mit dem Messstoff M in Kontakt kommt.

Zudem ergibt sich eine Kostenersparnis, da in der Folge weder Thermometer noch Beutel oder Beutelinhalt gewechselt werden müssen. Anstelle eines Thermometers kann auch ein anderer oder zusätzlicher Messwertaufnehmer zur Bestimmung weiterer Parameter wie bspw. Ultraschalldichte, Infrarot, optische spektroskopische Parameter vorgesehen sein. Dem Messprinzip des jeweiligen Messaufnehmers entsprechend kann das Kunststoffbeutelmaterial ausgewählt werden bzw. mindestens das Material das in dem Abschnitt vorliegt in dem das Thermometer T oder ein anderweitiger Messaufnehmer einspannbar ist. Vorzugsweise ist ein Thermometer T gemäß einer der vorgeschlagenen Ausgestaltungen, insbesondere gemäß Figur 1, 2 oder 5, in das Halteteil 29 eingespannt bzw. eingesetzt.

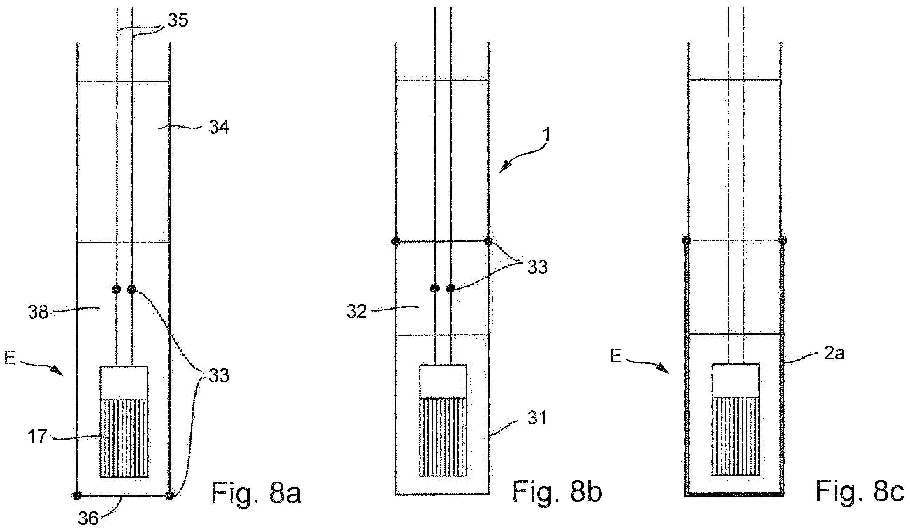

Figur 8 a) zeigt die schematische Darstellung eines Querschnitts durch eine Fühlerspitze eines Thermometers T. Die Fühlerspitze besteht dabei im Wesentlichen aus dem prozessseitigen Fühlerende E in dem ein temperaturabhängiges Sensorelement 17 angeordnet ist. Das Schutzrohr 1 weist an dem prozessseitigen Fühlerende E, bei dem es sich insbesondere um ein Schutzrohrende handeln kann, eine Endplatte 36 auf, die über eine Verbindungsstelle 33, wie z. B. ein Schweißung, mit dem restlichen Schutzrohr 1 verbunden ist. In das Schutzrohr 1 sind Anschlussdrähte 35 in einem bspw. mineralisolierten Anschlusskabel 34 eingebracht. Die Anschlussdrähte 35 sind im Bereich der Fühlerspitze über eine Verbindungsstelle 33 mit dem temperaturabhängigen Sensorelement 17 verbunden. Das temperaturabhängige Sensorelement 17 ist dabei ebenso wie die Verbindungsstelle 33 zwischen den Anschlussdrähten 35 und dem temperaturabhängigen Widerstandselement 17 in eine Füllung 38 eingebettet. Die Füllung 38 besteht dabei bevorzugt aus einem thermisch leitfähigen Material, so dass das temperaturabhängige Sensorelement 17, bei dem es sich bspw. um ein temperaturabhängiges Widerstandselement handelt, eine gute thermische Anbindung zu dem Prozess erfährt.

Fig. 8 b) zeigt einen Querschnitt durch eine Fühlerspitze eines Thermometers T mit einem anderen Aufbau. Die Fühlerspitze besteht dabei im Wesentlichen aus einem Kappenteil 31, in dem das temperaturabhängige Sensorelement 17 angeordnet ist. Das, insbesondere zylindrische, Kappenteil 31 ist über eine Verbindungsstelle 33 mit dem restlichen, insbesondere zylindrischen, Schutzrohr 1 verbunden. Die Anschlussdrähte 35 des Thermometers T in Fig. 8 b) sind z. B. innerhalb eines Keramik-Formteils 32 mit dem temperaturabhängigen Sensorelement 17 bzw. dessen Anschlussleitungen verbunden. Dabei werden die Anschlussdrähte 35 und die Anschlussleitungen im Bereich des Keramik-Formteils 32 - über eine Verbindungsstelle 33 - elektrisch leitend miteinander verbunden. Wie in Figur 8 a) ist das temperaturabhängige Sensorelement 17 in eine Füllung 38 eingebettet. Die Füllung 38 erstreckt sich innerhalb des Kappenteils 31 vorteilhaft bis zu dem Keramik-Formteil 32, das zumindest teilweise auch in dem Kappenteil 31 angeordnet sein kann.
Figur 8 c) zeigt eine Fühlerspitze eines Thermometers T mit einem Aufbau gemäß Figur 8 b) das zusätzlich über eine Beschichtung 2a, vorteilhaft z. B. aus Gold- bzw. Chrom, verfügt. Die Beschichtung 2a kann dabei auf der Außenseite wenigstens in einem Teilbereich der Fühlerspitze aufgebracht sein. Im Ausführungsbeispiel gemäß Figur 8 c) ist die Gold- bzw. Chrombeschichtung 2a auf der Außenseite des Kappenteils 31 angebracht, kann sich aber auch bis auf das daran anschließende Schutzrohr 1 erstrecken. Die Beschichtung 2a kann dabei bspw. durch einen galvanischen Prozess erfolgen. Diese Beschichtung 2a kann zudem wenigstens in einem Teilbereich auf der Innenseite der Fühlerspitze, insbesondere des Kappenteils 31 und/oder des Schutzrohrs 1, erfolgen. Das Kappenteil 31 kann dabei bspw. durch einen Tiefzieh- bzw. Spritzguss oder Sinterprozess, z. B. aus Edelstahl, Kunststoff oder Keramik, hergestellt werden. Die in Figur 8 a), b),c) gezeigten Fühlerspitzen können auch Teil eines Messeinsatzes sein und in ein weiteres Schutzrohr, bspw. in eine Wandeinziehung 21 eines Behälters, eingebracht werden.

Durch die Gold- bzw. Chrombeschichtung 2a der Fühlerspitze, insbesondere des Kappenteils 31, kann eine Verwechslung von Thermometern T oder Messeinsätzen mit sonst gleichen mechanischen Eigenschaften vermieden werden. Ferner können dadurch Thermometer T hinsichtlich ihrer Herstellungsverfahren und der damit verbundenen unterschiedlichen Messeigenschaften unterschieden werden. Durch die Gold- und/oder Chrombeschichtung 2a kann zudem die Verzunderung und/oder Verfärbung des Schutzrohrs 1 bzw. des Kappenteils 31 verhindert werden.

Ferner kann in dem Fall, dass ein solches Thermometer T in ein weiteres Schutzrohr eingebracht wird, die thermische Anbindung an das weitere Schutzrohr optimiert werden. Durch die Gold-und/oder Chrombeschichtung 2a kann weiterhin die Korrosion und/oder Anhaftneigung eines solchen als Messeinsatz verwendeten Thermometers T minimiert werden.

Anstelle der in Figur 8 a), b), c) gezeigten zylindrischen Fühlerspitze, insbesondere des zylindrischen Kappenteils 31, kann auch eine Fühlerspitze bzw. ein Kappenteil 31 verwendet werden, das eine andere, insbesondere runde, kugelförmige, glockenförmige oder ovale Form an dem prozessseitigen Ende E, in dem das temperaturanhängige Sensorelement 17 angeordnet ist, aufweist. Ferner kann anstelle des gezeigten zylindrischen Keramik-Formteils 32 ein wie in den Figuren 1, 2, und 5 gezeigtes insbesondere schalenförmiges Schutzrohrinnenteil 7 verwendet werden. Es kann also insbesondere ein Thermometer T vorgesehen sein, dass einen Aufbau gemäß einer der in Figur 1, 2 oder 5 aufweist, und das an der Außenseite wenigstens in einem Teilbereich des Schutzrohrs 1, insbesondere im Bereich der Fühlerspitze, d.h. im Bereich des Schutzrohrendes E, eine entsprechende Beschichtung 2a aufweist. Als temperaturabhängiges Sensorelement 17 kann z. B. auch ein Thermoelement zur Bestimmung der Temperatur verwendet werden. Dann können ggf. das Keramik-Formteil 32 und / oder das Anschweißen der Anschlussdrähte 35 im Bereich der Fühlerspitze entfallen.

### Bezugszeichenliste

- 1: Schutzrohr
- 2: Beschichtung
- 2a: Gold- bzw. Chrombeschichtung
- 3: Beschichtung
- 4: Thermoelementschenkel
- 5: Thermoelementschenkel
- 6: Thermoelementkontaktverbindung
- 7: Schutzrohrinnenteil zur Aufnahme der Thermoelementschenkel
- 8: Durchführung zur Aufnahme der Thermoelementschenkel
- 9: Ansatzteil für Evakuierungs- und Ableitrohr mit (Berstscheibe) od. Durchschlagsventil
- 10: Berstscheibe
- 11: Armaturenabdeckung, diffusionsfest
- 12: Anschluss für Dosenmanometer
- 13: temperaturabhängiges Widerstandselement mit 2-Draht Anschluss
- 14: Modifiziertes Dosenmanometer
- 15: Reflektierende anzeigende Beschichtung
- 16: temperaturabhängiges Widerstandselement mit 4-Draht Anschluss
- 17: Widerstandsmesselement
- 19: reflektierende scheibenförmige Lamellen
- 20: Rohrleitungswand, Behälterwand
- 21: Konisch angepasste Wandeinziehung
- 22: Rückwand
- 23: Kunststoffbeutel
- 24: Beutelhalteteil
- 25: Anschlagskante für Schutzrohraufnahme
- 26: Rastnase
- 27: Messmedium
- 28: Anliegendes Segment des Kunststoffbeutels
- 29: Halteteil
- M: Messstoff
- E: Schutzrohrende
- H: Hohlraum
- T: Thermometer
- SE: Sensorelement
- 31: Kappenteil
- 32: Keramik-Formteil
- 33: Verbindungsstelle
- 34: Mantelisolation
- 35: Anschlussdrähte für ein temperaturabhängiges Widerstandselement
- 36: Endplatte
- 38: Füllung

## Patentansprüche

1. Thermometer (T) mit einem Schutzrohr (1) und einem Schutzrohrinnenteil (7) zum Einsetzen in das Schutzrohr (1),
wobei das Schutzrohrinnenteil (7) zum Anordnen von Leiterelementen (4, 5), dient, und
wobei das Schutzrohrinnenteil (7) an die Form der Innenseite des Schutzrohrs (1) im Bereich eines geschlossenen Schutzrohrendes (E), welches im Betriebsfall einem Messstoff ausgesetzt ist, angepasst ist,
**dadurch gekennzeichnet,**
**dass** das Schutzrohrinnenteil (7) dazu dient, die Leiterelemente (4, 5) auf der im eingebauten Zustand dem Schutzrohr (4, 5) zugewandten Seite des Schutzrohrinnenteils (7) anzuordnen,
**dass** das Schutzrohrinnenteil (7) eine schalenartige Form aufweist,
und **dass** das Schutzrohrinnenteil (7) an die korrespondierend geformte Innenseite des Schutzrohrendes (E) angepasst ist und
wobei das Schutzrohrinnenteil eine Dicke aufweist, die im Vergleich zu den übrigen Ausmaßen des Schutzrohrinnenteils geringer ist.

2. Thermometer (T) nach Anspruch 1,
**dadurch gekennzeichnet,**
**dass** das Schutzrohrinnenteil (7) aus einem wärmeleitfähigen und/oder elektrisch bzw. dielektrisch isolierenden Material, insbesondere einer Keramik, besteht.

3. Thermometer (T) nach Anspruch 1 oder 2,
**dadurch gekennzeichnet,**
**dass** das Schutzrohrinnenteil (7), insbesondere zumindest auf der im eingebauten Zustand vom Schutzrohr (7) abgewandten Seite, eine metallische oder glaskeramische Beschichtung (2) aufweist.

4. Thermometer (T) nach einem der vorherigen Ansprüche, **dadurch gekennzeichnet,**
**dass** das Schutzrohrinnenteil (7) Führungselemente aufweist, die dazu dienen, die Leiterelemente (4, 5) in einer vorgesehenen Anordnung anzuordnen, vorzugsweise sind die Leiterelemente (4, 5), insbesondere passgenau, in die Führungselemente einbringbar.

5. Thermometer (T) nach einem der vorherigen Ansprüche **dadurch gekennzeichnet,**
**dass** die Leiterelemente (4, 5) ein Sensorelement (SE) oder mehrere Sensorelemente bilden, bspw. mindestens ein Thermoelement (6) oder mindestens ein temperaturabhängiges Widerstandselement.

6. Thermometer (T) nach dem vorherigen Anspruch, **dadurch gekennzeichnet,**
**dass** das Schutzrohrinnenteil (7) mit der Innenseite des Schutzrohres (1) kraftschlüssig, insbesondere per Federkraft, verbunden ist.

7. Thermometer (T) nach einem der Ansprüche 5 bis 6, **dadurch gekennzeichnet,**
**dass** die Leiterelemente (4, 5) über ein Vergussmaterial in thermischem Kontakt mit dem Schutzrohr (1) stehen.

8. Thermometer (7) nach einem der Ansprüche 5 bis 7, **dadurch gekennzeichnet,**
**dass** der durch das Schutzrohr (1) gebildete Hohlraum (H) evakuiert ist oder evakuierbar ist.

9. Thermometer (T) nach einem der Ansprüche 5 bis 8, **dadurch gekennzeichnet,**
**dass** innerhalb des Schutzrohrs (1) mehrere Lammellen (19), insbesondere parallel zueinander, angeordnet sind.

10. Thermometer (T) nach einem der Ansprüche 5 bis 9, **dadurch gekennzeichnet,**
**dass** das Schutzrohr (1) an einem seiner Enden durch eine Abdeckung (11) verschlossen ist, durch die hindurch die Leiterelemente (4, 5) geführt sind.

11. Thermometer (T) nach dem vorherigen Anspruch,
**dadurch gekennzeichnet,**
**dass** in der Abdeckung (11) eine Einrichtung (14) zur Bestimmung des Drucks in dem Schutzrohr (1) vorgesehen ist, oder dass in der Abdeckung (11) Zuleitungen zu einer solchen Einrichtung (14) vorgesehen sind.

12. Thermometer (T) nach einem der Ansprüche 5 bis 11, **dadurch gekennzeichnet,**
**dass** das Schutzrohr (1) und/oder das Schutzrohrinnenteil (7) an seiner Außenseite zumindest im Bereich des im Betriebsfall dem Messstoff ausgesetzten Schutzrohrendes (E) eine Beschichtung, insbesondere aus Gold oder Chrom, aufweist.

13. Behälter (20) mit wenigstens einem Thermometer (T) nach zumindest einem der Ansprüche 8 bis 12, wobei ein Aufnahmeteil (21) vorgesehen ist in das das Thermometer (T) einsetzbar ist, wobei das Aufnahmeteil Bestandteil der Wandung des Behälters ist.

14. System bestehend aus einem Beutel (23) oder einem Behälter mit einer wenigstens abschnittsweise flexiblen Wandung (28) zur Aufnahme eines Messstoffs und einem Thermometer (T) nach zumindest einem der Ansprüche 5 bis 12, wobei das Thermometer (T) in ein Aufnahmeteil des Beutels (23) oder des Behälters einbringbar ist, so dass es wenigstens abschnittsweise bündig an dem Beutel (23) bzw. der flexiblen Wandung (28) des Behälters anliegt.

## Claims

1. Thermometer (T) with a thermowell (1) and an interior part of the thermowell (7) designed to be inserted into the thermowell (1),
wherein the interior part of the thermowell (7) is used for the arrangement of conductor elements (4, 5), and wherein the interior part of the thermowell (7) is adapted to the shape of the inside of the thermowell (1) in the area of a closed end of the thermowell (E), which is exposed to a medium during operation,
**characterized in that**
the interior part of the thermowell (7) is used to arrange the conductor elements (4, 5) on the side of the interior part of the thermowell (7) facing towards the thermowell in the installed state,
**in that** the interior part of the thermowell (7) has a dish-like shape, and
**in that** the interior part of the thermowell (7) is adapted to the correspondingly shaped inside of the end of the thermowell (7), and
wherein the interior part of the thermowell has a thickness which is less compared with the other dimensions of the interior part of the thermowell.

2. Thermometer (T) as claimed in Claim 1,
**characterized in that**
the interior part of the thermowell (7) is made from a heat-conductive and/or electrically or dielectrically insulating material, particularly ceramic.

3. Thermometer (T) as claimed in Claim 1 or 2,
**characterized in that**
the interior part of the thermowell (7) has a metal or glass-ceramic layer (2) particularly at least on the side facing away from the thermowell (7) in the installed state.

4. Thermometer (T) as claimed in one of the previous claims,
**characterized in that**
the interior part of the thermowell (7) has guide elements that are used to arrange the conductor elements (4, 5) is an envisaged arrangement, wherein the conductor elements (4, 5) can preferably be introduced into the guide elements, particularly in a manner in which they fit perfectly.

5. Thermometer (T) as claimed in one of the previous claims,
**characterized in that**
the conductor elements (4, 5) form a sensor element (SE) or several sensor elements, for example at least one thermocouple (6) or at least one temperature-dependent resistance element.

6. Thermometer (T) as claimed in the previous claim,
**characterized in that**
the interior part of the thermowell (7) is connected via a non-positive locking connection, particularly spring force, to the inside of the thermowell (1).

7. Thermometer (T) as claimed in one of the Claims 5 to 6,
**characterized in that**
the conductor elements (4, 5) are in thermal contact with the thermowell (1) via a potting material.

8. Thermometer (T) as claimed in one of the Claims 5 to 7,
**characterized in that**
the cavity (H) formed by the thermowell (1) is evacuated or can be evacuated.

9. Thermometer (T) as claimed in one of the Claims 5 to 8,
**characterized in that**
several ribs (19) are arranged inside the thermowell (1), particularly parallel to one another.

10. Thermometer (T) as claimed in one of the Claims 5 to 9,
**characterized in that**
the thermowell (1) is sealed at one of its ends by a cover (11) through which the conductor elements (4, 5) are guided.

11. Thermometer (T) as claimed in the previous claim,
**characterized in that**
a unit (14) to determine the pressure in the thermowell (1) is provided in the cover (11), or **in that** feed lines to such a unit (14) are provided in the cover.

12. Thermometer (T) as claimed in one of the Claims 5 to 11,
**characterized in that**
the thermowell (1) and/or the interior part of the thermowell (7) has a layer, particularly a layer of gold or chromium, on the outside at least in the area of the end of the thermowell (E) exposed to the medium during operation.

13. Vessel (20) with at least one thermometer (T) as claimed in at least one of the Claims 8 to 12,
wherein a cavity (21) is provided into which the thermometer (T) can be placed, said cavity being part of the wall of the vessel.

14. System consisting of a bag (23) or a vessel with a wall that is at least partially flexible (28) designed to receive a medium and a thermometer (T) as claimed in at least one of the Claims 5 to 12,
wherein the thermometer (T) can be introduced into a cavity of the bag (23) or vessel in such a way that it is flush, at least in part, with the bag (23) or the flexible wall (28) of the vessel.

## Revendications

1. Thermomètre (T) avec un tube de protection (1) et une partie intérieure de tube de protection (7) destinée à être insérée dans un tube de protection (1),
la partie intérieure de tube de protection (7) servant à la disposition d'éléments conducteurs (4, 5), et la partie intérieure de tube de protection (7) étant adaptée à la forme de la face intérieure du tube de protection (1) dans la zone d'une extrémité de tube de protection (E) fermée, laquelle est exposée à un produit pendant le fonctionnement,
**caractérisé**
**en ce que** la partie intérieure de tube de protection (7) sert à disposer les éléments conducteurs (4, 5), à l'état monté, sur le côté de la partie intérieure de tube de protection (7) faisant face au tube de protection (4, 5),
**en ce que** la partie intérieure de tube de protection (7) présente une forme de coque, et
**en ce que** la partie intérieure de tube de protection (7) présente une épaisseur, qui est faible comparée aux autres dimensions de la partie intérieure de tube de protection.

2. Thermomètre (T) selon la revendication 1,
**caractérisé**
**en ce que** la partie intérieure de tube de protection (7) est constituée d'un matériau thermoconducteur et/ou isolant électriquement ou diélectriquement, notamment une céramique.

3. Thermomètre (T) selon la revendication 1 ou 2,
**caractérisé**
**en ce que** la partie intérieure de tube de protection (7) comporte un revêtement (2) métallique ou vitrocéramique, notamment au moins sur le côté opposé au tube de protection (1), à l'état monté.

4. Thermomètre (T) selon l'une des revendications précédentes,
**caractérisé**
**en ce que** la partie intérieure de tube de protection (7) comporte des éléments de guidage, qui servent à disposer les éléments conducteurs (4, 5) dans une configuration prévue, les éléments conducteurs (4, 5) pouvant de préférence être introduits, notamment selon un ajustement précis, dans les éléments de guidage.

5. Thermomètre (T) selon l'une des revendications précédentes,
**caractérisé**
**en ce que** les éléments conducteurs (4, 5) constituent un élément capteur (SE) ou plusieurs éléments capteurs, par exemple au moins un thermoélément (6) ou au moins un élément résistif dépendant de la température.

6. Thermomètre (T) selon la revendication précédente,
**caractérisé**
**en ce que** la partie intérieure de tube de protection (7) est reliée avec la face intérieure du tube de protection (1) par une liaison de force, notamment par une force de ressort.

7. Thermomètre (T) selon l'une des revendications 5 à 6,
**caractérisé**
**en ce que** les éléments conducteurs (4, 5) sont en contact thermique avec le tube de protection (1) par l'intermédiaire d'un matériau de scellement.

8. Thermomètre (T) selon l'une des revendications 5 à 7,
**caractérisé**
**en ce que** l'espace creux (H) formé par le tube de protection (1) est mis sous vide ou peut être mis sous vide.

9. Thermomètre (T) selon l'une des revendications 5 à 8,
**caractérisé**
**en ce que** sont disposées, à l'intérieur du tube de protection (1), plusieurs lamelles (19), notamment parallèles les unes aux autres.

10. Thermomètre (T) selon l'une des revendications 5 à 9,
**caractérisé**
**en ce que** le tube de protection est fermé, au niveau d'une de ses extrémités, par un obturateur (11) à travers lequel sont acheminés les éléments conducteurs (4, 5).

11. Thermomètre (T) selon la revendication précédente,
**caractérisé**
**en ce qu'**est prévu, dans l'obturateur (11), un dispositif (14) destiné à la détermination de la pression régnant dans le tube de protection (1), ou en ce que sont prévus, dans l'obturateur (11), des fils d'alimentation pour un tel dispositif (14).

12. Thermomètre (T) selon l'une des revendications 5 à 11,
**caractérisé**
**en ce que** le tube de mesure (1) et/ou la partie intérieure de tube de protection (7) présente sur sa face extérieure un revêtement, notamment en or ou en chrome, au moins dans la zone de l'extrémité de tube de protection (E) exposée au produit pendant le fonctionnement.

13. Récipient (20) avec au moins un thermomètre (T) selon au moins l'une des revendications 8 à 12,
pour lequel est prévue une cavité, dans laquelle peut être introduite le thermomètre (T), la cavité étant intégrée dans la paroi du réservoir.

14. Système constitué d'un sachet (23) ou d'un récipient avec au moins partiellement une paroi flexible (28) destinée à la réception d'un produit et d'un thermomètre (T) selon au moins l'une des revendication 5 à 12,
pour lequel le thermomètre (T) peut être introduit dans une cavité du sachet (23) ou du récipient, de telle sorte qu'il repose au moins partiellement à fleur contre le sachet (23) ou la paroi flexible (28) du récipient.
